# EUROPEAN PATENT SPECIFICATION

(11) **EP 1 442 691 B1**
(45) Date of publication and mention of the grant of the patent: **31.08.2005**
(21) Application number: 04001007.6
(22) Date of filing: 19.01.2004
(51) Int. Cl.: A47J 47/20, A47J 43/24

(54) **Multipurpose accessory applicable to sinks and the like**
Mehrzweckvorrichtung für Spüle und dergleichen
Accessoire multifonctions pour évier et similaires

(30) Priority: 29.01.2003 IT mi20030036
(43) Date of publication of application: 04.08.2004
(73) Proprietor: Bertola, Pierangelo, 27038 Robbio (Prov. of Pavia) (IT)
(72) Inventor: Bertola, Pierangelo, 27038 Robbio (Prov. of Pavia) (IT)
(74) Representative: Modiano, Guido

(56) References cited:
- US-A- 2 691 237
- US-A- 5 279 007

## Description

The present invention relates to a multipurpose accessory that can be applied to sinks and the like. Such an accessory is disclosed in US-A-5 279 007.

As is known, accessories are already commercially available which are used to drain cutlery and the like and are generally provided by means of a draining body that is arranged inside a collection container.

Likewise, accessories are known which are used to wash vegetables and generally have a drum in which the vegetables to be washed with running water are placed.

In practice, the conventional solutions use individual devices that must be provided with their own supporting means, accordingly causing considerable difficulties in their placement in modem kitchens, where there is the well-known problem of available space.

The aim of the invention is to eliminate the drawbacks noted above, by providing a multipurpose accessory that can be applied to sinks and the like and allows to use the same element for multiple separate functions, accordingly making it particularly practical and versatile.

Within this aim, an object of the invention is to provide a multipurpose accessory that can be applied to a sink and the like without requiring additional supporting means.

Another object of the present invention is to provide a multipurpose accessory that thanks to its particular constructive characteristics is capable of giving the greatest assurances of reliability and safety in use.

Another object of the present invention is to provide a multipurpose accessory that can be obtained easily starting from commonly commercially available elements and materials and is also competitive from a merely economical standpoint.

This aim and these and other objects that will become better apparent hereinafter are achieved by a multipurpose accessory applicable to sinks and the like, according to the invention, characterized in that it comprises a first container body and a second container body with drainage openings, said container bodies being mutually connected by a bridge in order to place the multipurpose accessory so that it straddles the element that separates the two basins of a sink.

Further characteristics and advantages of the invention will become better apparent from the detailed description of a multipurpose accessory applicable to sinks and the like, illustrated by way of non-limiting example in the accompanying drawings, wherein:
Figure 1 is a schematic elevated perspective view of the multipurpose accessory according to the invention;
Figure 2 is a perspective view, taken from below, of the multipurpose accessory;
Figure 3 is a view of the multipurpose accessory, schematically connected to a sink;
Figure 4 is a transverse sectional view of the accessory applied to a sink.

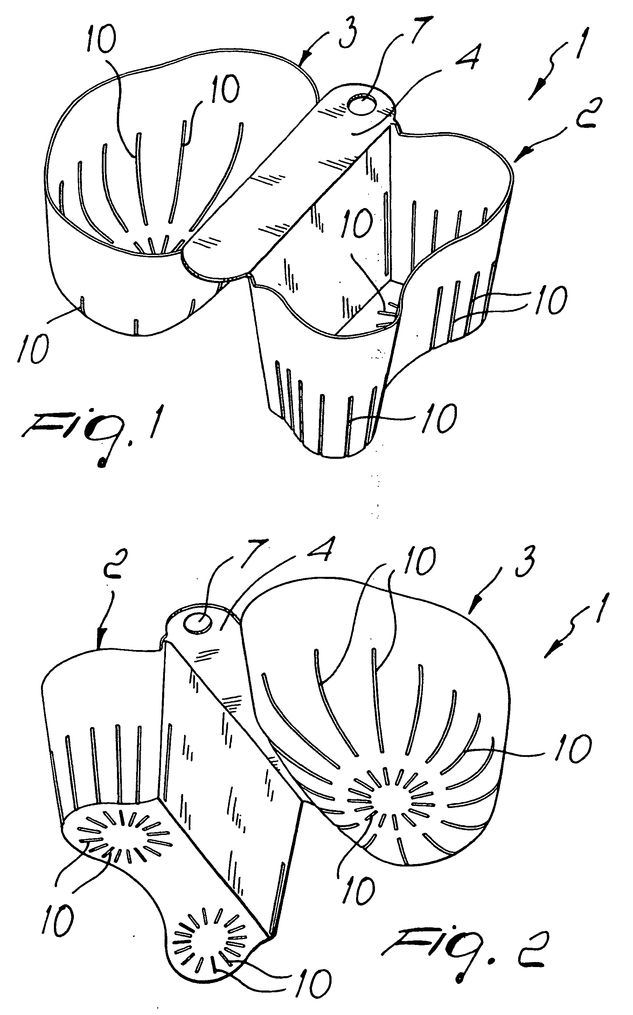

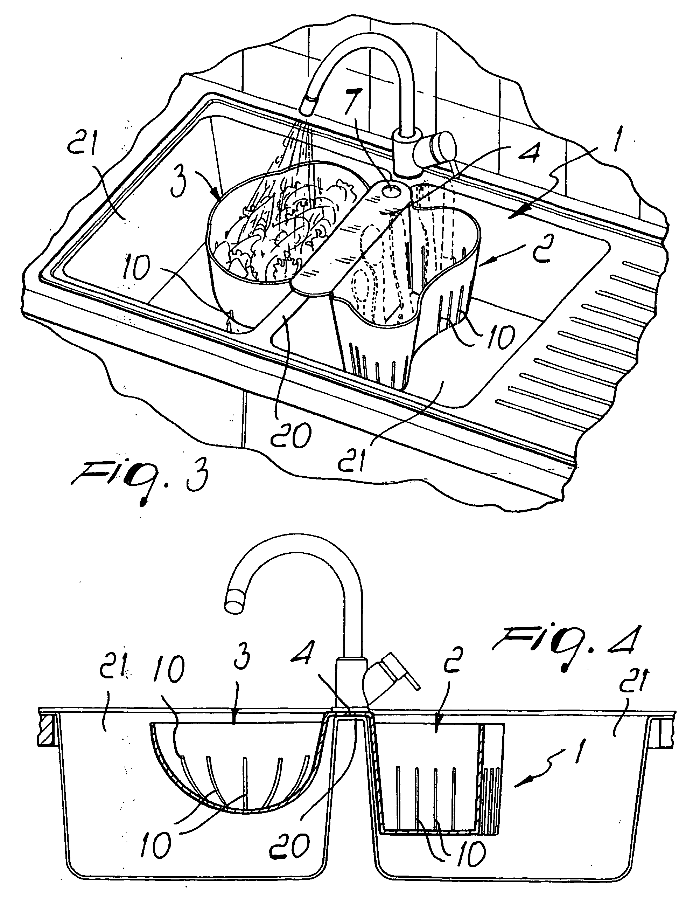

With reference to the figures, the multipurpose accessory applicable to sinks and the like according to the invention, generally designated by the reference numeral 1, comprises a first container body 2 and a second container body 3, which are mutually connected by a bridge 4.

The containers 2 and 3 provide draining elements, and for this purpose they are provided with multiple openings 10 that are variously distributed and advantageously but not necessarily are formed by slots that are arranged side-by-side and in a radial pattern.

The two containers 2 and 3, thanks to the presence of the openings 10, provide drainage regions that allow the most disparate uses; it is in fact possible to drain cutlery or other kitchen accessories, it is possible to drain pasta or optionally it is also possible to use the container body to wash vegetables, fruit and the like.

In order to facilitate the various uses, one of the two containers preferably has a narrower configuration and is deeper than the other container, which instead is shallower and wider.

The accessory thus provided has the particular characteristic that it can be arranged so as to straddle the separator element 20 that is arranged between the basins 21 of a sink 22, so that it remains firmly in position and allows easy draining with discharge of the liquid directly into the sink.

It should be added to the above that advantageously the accessory is provided so that it can be stacked, so as to facilitate its storage, and furthermore at the bridge 4 there is a through hole 7 that allows to easily hang the accessory.

From the above description it is therefore evident that the invention achieves the intended aim and objects, and in particular the fact is stressed that an accessory is provided which has two separate containers that allow to arrange the accessory so that it straddles the dividing partition between the two basins of a sink, providing great stability in use and allowing to position it without having to perform complicated or difficult maneuvers.

In practice, although the best results have been obtained by using food-safe plastic material, the materials used may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A multipurpose accessory (1) applicable to sinks and the like, **characterized in that** it comprises a first container body (2) and a second container body (3) with drainage openings (10), said container bodies being mutually connected by a bridge (4) in order to place the multipurpose accessory so that it straddles the element (20) that separates the two basins (21) of a sink (22).

2. The multipurpose accessory according to claim 1, **characterized in that** said first and second container bodies (2,3) have different depths.

3. The multipurpose accessory according to one or more of the preceding claims, **characterized in that** said first and second container bodies (2,3) have different widths.

4. The multipurpose accessory according to one or more of the preceding claims, **characterized in that** said drainage openings (10) are provided by notches that are arranged side-by-side and in a radial pattern.

5. The multipurpose accessory according to one or more of the preceding claims, **characterized in that** at least one of said container bodies (2,3) is adapted to drain cutlery and kitchen accessories.

6. The multipurpose accessory according to one or more of the preceding claims, **characterized in that** at least one of said container bodies (2,3) is adapted to drain pasta.

7. The multipurpose accessory according to one or more of the preceding claims, **characterized in that** at least one of said container bodies (2,3) is adapted to wash vegetables and the like.

8. The multipurpose accessory according to one or more of the preceding claims, **characterized in that** it can be stacked with an identical accessory.

9. The multipurpose accessory according to one or more of the preceding claims, **characterized in that** it comprises a through hole (7) that is formed in said bridge (4).

## Patentansprüche

1. Mehrzweckzubehörteil (1), das auf Spülbecken und dergleichen anwendbar ist, **dadurch gekennzeichnet, dass** es einen ersten Behälterkörper (2) und einen zweiten Behälterkörper (3) mit Entleerungsöffnungen (10) umfasst, wobei die Behälterkörper durch eine Brücke (4) miteinander verbunden sind, um das Mehrzweckzubehörteil so anzuordnen, dass es das Element (20), das die beiden Becken (21) eines Spülbeckens (22) trennt, überspannt.

2. Mehrzweckzubehörteil nach Anspruch 1, **dadurch gekennzeichnet, dass** der erste und der zweite Behälterkörper (2, 3) unterschiedliche Tiefen haben.

3. Mehrzweckzubehörteil nach einem oder mehreren der vorhergehenden Ansprüche, **dadurch gekennzeichnet, dass** der erste und der zweite Behälterkörper (2, 3) unterschiedliche Weiten besitzen.

4. Mehrzweckzubehörteil nach einem oder mehreren der vorhergehenden Ansprüche, **dadurch gekennzeichnet, dass** die Entleerungsöffnungen (10) durch Schlitze gebildet sind, die nebeneinander und in einem radialen Muster angeordnet sind.

5. Mehrzweckzubehörteil nach einem oder mehreren der vorhergehenden Ansprüche, **dadurch gekennzeichnet, dass** wenigstens einer der Behälterkörper (2, 3) zum Abtropfen von Besteck und Küchenzubehörteilen geeignet ist.

6. Mehrzweckzubehörteil nach einem oder mehreren der vorhergehenden Ansprüche, **dadurch gekennzeichnet, dass** wenigstens einer der Behälterkörper (2, 3) zum Abgießen von Nudeln geeignet ist.

7. Mehrzweckzubehörteil nach einem oder mehreren der vorhergehenden Ansprüche, **dadurch gekennzeichnet, dass** wenigstens einer der Behälterkörper (2, 3) zum Waschen von Gemüse oder dergleichen geeignet ist.

8. Mehrzweckzubehörteil nach einem oder mehreren der vorhergehenden Ansprüche, **dadurch gekennzeichnet, dass** es mit einem gleichen Zubehörteil gestapelt werden kann.

9. Mehrzweckzubehörteil nach einem oder mehreren der vorhergehenden Ansprüche, **dadurch gekennzeichnet, dass** es ein in der Brücke (4) ausgebildetes Durchgangsloch (7) aufweist.

## Revendications

1. Un accessoire multifonctions (1) pour éviers et similaires, **caractérisé en ce qu'**il comprend un premier corps formant contenant (2) et un deuxième corps formant contenant (3) avec des ouvertures de vidange (10), lesdits corps formant contenant étant connectés l'un avec l'autre par un pont (4) de façon à placer l'accessoire multifonctions de sorte qu'il soit à cheval sur l'élément (20) qui sépare les deux cuvettes (21) d'un évier (22).

2. L'accessoire multifonctions selon la revendication 1, **caractérisé en ce que** lesdits premier et deuxième corps formant contenant (2, 3) ont des épaisseurs différentes.

3. L'accessoire multifonctions selon l'une ou plusieurs des revendications précédentes, **caractérisé en ce que** lesdits premier et deuxième corps formant contenant (2, 3) ont des largeurs différentes.

4. L'accessoire multifonctions selon l'une ou plusieurs des revendications précédentes, **caractérisé en ce que** lesdites ouvertures de vidange (10) sont formées par des entailles qui sont disposées côte à côte et selon un motif radial.

5. L'accessoire multifonctions selon l'une ou plusieurs des revendications précédentes, **caractérisé en ce qu'**au moins l'un desdits corps formant contenant (2, 3) est adapté à égoutter des couverts et des accessoires de cuisine.

6. L'accessoire multifonctions selon l'une ou plusieurs des revendications précédentes, **caractérisé en ce qu'**au moins l'un desdits corps formant contenant (2, 3) est adapté à égoutter des pâtes.

7. L'accessoire multifonctions selon l'une ou plusieurs des revendications précédentes, **caractérisé en ce qu'**au moins l'un desdits corps formant contenant (2, 3) est adapté à laver des légumes et similaires.

8. L'accessoire multifonctions selon l'une ou plusieurs des revendications précédentes, **caractérisé en ce qu'**il peut être empilé avec un accessoire identique.

9. L'accessoire multifonctions selon l'une ou plusieurs des revendications précédentes, **caractérisé en ce qu'**il comprend un perçage traversant (7) qui est formé dans ledit pont (4).
